# EUROPEAN PATENT APPLICATION

(11) **EP 1 925 949 A1**
(43) Date of publication of application: **28.05.2008**
(21) Application number: 06256033.9
(22) Date of filing: 24.11.2006
(51) Int. Cl.: G01S 15/89, G01S 15/42

(54) **Ship mounted underwater sonar system**

(71) Applicant: BP Shipping Limited, Sunbury on Thames, Middlesex TW16 7BP (GB)
(72) Inventor: The designation of the inventor has not yet been filed
(74) Representative: Perkins, Nicholas David

(57) **Abstract**

A process and apparatus for detecting underwater objects comprises an elongate array of ultrasound transmitter elements mounted substantially vertically and forward facing on the bow of the ship from which is transmitted a sequence of ultrasound wave pulses, with each pulse having a frequency and vertical beam angle which are different to the frequency and vertical beam angle of the preceding pulse in the sequence, the frequency being characteristic of the vertical beam angle, and an elongate array of ultrasound receiver elements mounted substantially horizontally on the bow of said ship with the receiver elements forward facing which receive any ultrasound waves reflected from objects in front of the ship, the output from the receiver elements being steered horizontally using differing phase shifts for the receiver element outputs and for each horizontal position of the beam of outputs, the outputs from the receiver elements having those phase shifts associated with that horizontal position of the beam of outputs are summed in a beamformer.

## Description

This invention relates to sonar systems and in particular a process for detecting underwater objects and to a ship having an underwater sonar system.

Sonar systems are known for detection of underwater objects.

According to WO 03/001231 one type of sonar system that is capable of producing three-dimensional images in use in larger commercial and recreational vessels generates a planar beam ping and receives echoes using a planar receiving "beam" that is perpendicular to it. It states that this allows the system to select a particular spherical angle "pixel" which, when combined with the return reflection time, allows the construction of three dimensional information. The system is said to be downward-looking and used for bottom mapping. The system is said to be expensive because the transmit power has to be regulated to beam-form the outgoing signal. The system which is the subject of WO03/001231 uses a Mills Cross interference method to image a volume of water ahead of, or to the side of, a boat. The Mills Cross technique described uses for example, 8 channels on each leg of an L-shaped array of hydrophone receivers which is said to provide the resolution of a full array of 64 receiving hydrophones. In WO 03/01231 a communications systems such as a network is used to process the image data.

Published US patent application 2005/0099887 relates to a 3-D forward looking sonar with a fixed frame of reference for navigation. According to this document, in a forward looking sonar a transmit transducer projects a signal into the water ahead of the vessel and a phased array of receiving sensors provides signal to a computer which determines the azimuthal and elevation angles of arrival and time of arrival. The sonar is equipped with tilt and roll sensors and may be interfaced with GPS and a compass to allow a 3-D image ahead of the vessel to be created with a fixed frame of reference relative to the earth. The system is illustrated with an array of transducers to collect acoustic reflection signals. If all or some of the receive transducers are used as all or part of the transmit array by means of a Transmit/receive (T/R) switch the array must be a 2 dimensional array.

There remains a need for a system for detecting underwater objects.

Thus, according to the present invention there is provided a process for detecting underwater objects comprising :
(a) providing a ship with an underwater sonar system comprising an elongate array of ultrasound transmitter elements and an elongate array of ultrasound receiver elements in which the array of transmitter elements is mounted substantially vertically and forward facing on the bow of the ship such that in use, the transmitter elements transmit ultrasound wave pulses in a beam in the direction of travel of the ship, and the array of receiver elements is mounted substantially horizontally on the bow of said ship with the receiver elements forward facing to receive any ultrasound waves reflected from objects in front of the ship;
(b) transmitting from the transmitter elements, a sequence of ultrasound wave pulses, with each pulse having a frequency and vertical beam angle which are different to the frequency and vertical beam angle of the preceding pulse in the sequence, the frequency being characteristic of the vertical beam angle;
(c) receiving with the receiver elements, any ultrasound waves reflected from objects in front of the ship; horizontally steering a beam of outputs from the receiver elements by using differing phase shifts for the receiver element outputs; and for each horizontal position of the beam of outputs, summing in a beamformer, the outputs from the receiver elements having those phase shifts associated with that horizontal position of the beam of outputs; and
(d) determining the 3-dimensional coordinates of any objects in front of the ship from the summed outputs from the receiver elements.

Also, according to the present invention there is provided a ship having an underwater sonar system comprising an elongate array of ultrasound transmitter elements and an elongate array of ultrasound receiver elements characterised in that :
(i) the array of transmitter elements is mounted substantially vertically and forward facing on the bow of the ship and is adapted such that in use, the transmitter elements transmit a sequence of ultrasound wave pulses, each pulse being in a beam in the direction of travel of the ship, with each pulse having a frequency and vertical beam angle which are different to the frequency and vertical beam angle of the preceding pulse in the sequence, the frequency being characteristic of the vertical beam angle, and
(ii) the array of receiver elements is mounted substantially horizontally on the bow of said ship with the receiver elements forward facing to receive any ultrasound waves reflected from objects in front of the ship, and is adapted such that in use, a beam of outputs from the receiver elements is steered horizontally by using differing phase shifts for the receiver element outputs and for each horizontal position of the beam of outputs, the outputs from the receiver elements having those phase shifts associated with that horizontal position of the beam of outputs are summed in a beamformer.

The present invention solves the need identified above by :
- providing an elongate array of ultrasound transmitter elements mounted substantially vertically and having elements which transmit a sequence of ultrasound wave pulses, with each pulse having a frequency and vertical beam angle which are different to the frequency and vertical beam angle of the preceding pulse in the sequence, the frequency being characteristic of the vertical beam angle; and
- providing an elongate array of ultrasound receiver elements mounted substantially horizontally, the output from the receiver elements being steered horizontally by using differing phase shifts for the receiver element outputs and for each horizontal position of the beam of outputs, the outputs from the receiver elements having those phase shifts associated with that horizontal position of the beam of outputs are summed in a beamformer.

A Mills Cross array, which consists of two perpendicular lines of transducers whose outputs are multiplied or correlated together, has a beam pattern, by the product theorem, which is the same as that of a plane rectangular array of elements of the same overall dimensions. Such a Mills Cross system has a low sensitivity and low array gain and is thus only useful where the signal to noise ratio is high and long range is not important. The present invention uses multiple frequencies for the ultrasound wave pulses to discriminate objects in a vertical water column in front of the ship. Thus, the frequency of the transmitted pulse provides the vertical coordinate of a detected object. The horizontal coordinate of a detected object is provided by steering a beam of output from the receiver elements by using differing phase shifts for the receiver element outputs. For each horizontal position of the beam of outputs, the outputs from the receiver elements having those phase shifts associated with that horizontal position of the beam of outputs are summed in a beamformer. This summing gives a higher gain than for a Mills Cross system and is more appropriate for long range detection.

In the present invention "vertical angle" means an angle with respect to the longitudinal axis of the ship, in a substantially vertical plane comprising the longitudinal axis of the ship. A positive vertical angle is thus upward pointing and a negative vertical angle is thus downward pointing.

In the present invention "horizontal angle" means an angle with respect to the longitudinal axis of the ship, in a substantially horizontal plane comprising the longitudinal axis of the ship. A positive horizontal angle is thus right or starboard pointing with respect to the forward facing, longitudinal axis of the ship.

Whilst it is preferred that the elongate array of transmitter elements is mounted vertically on the bow of the vessel, it may also be mounted at a small angle of between + 30 degrees (upward facing) and -30 degrees (downward facing), preferably between +10 degrees (upward facing) and -10 degrees (downward facing). The vertical angle of the vertical array may be monitored using an inclinometer, preferably an inclinometer internal to the array. Correction for the vertical angle of the vertical array may be made by adjustment of the phase of the ultrasound pulse from the transmitter elements and/or when determining the 3-dimensional coordinates of any objects in front of the ship from the ultrasound waves received by the receiver elements. Such corrections be made in response to the ship's movement and/or the constructional position of the array. Corrections due to the ships movement may be made using a Motion Reference Unit (MRU). MRU's can provide information about the ship's roll, pitch and/or heave.

The transmitter elements transmit a sequence of ultrasound wave pulses, each pulse being in a beam in the direction of travel of the ship, with each pulse having a frequency and vertical beam angle which are different to the frequency and vertical beam angle of the preceding pulse in the sequence, the frequency being characteristic of the vertical beam angle.

The number of pulses determines the number of transmitted beams in the vertical plane, each one having a predetermined frequency and angle from which the echoes are decoded to give the vertical coordinate information.

The sequence of ultrasound wave pulses may be controlled by a delay network for each transmitter element. Preferably, the sequence of ultrasound pulses is a contiguous sequence.

Each ultrasound wave pulse may have a duration of from 500 µs to 4 ms. A suitable duration is 2 ms. The duration of a contiguous sequence of ultrasound wave pulses is thus the sum of the durations of the pulses from the transmitter elements. Thus, for example, for a contiguous sequence of 32 pulses each with a pulse duration of 2 ms, the sequence has a duration of 64 ms.

The sequence of ultrasound wave pulses may be repeated at intervals. Thus, the sequence may be repeated at a frequency in the range of 200ms to 2 seconds, suitably at a frequency of 1 to 2 seconds.

Each transmitted ultrasound wave pulse has a frequency and a vertical beam angle different to that of the preceding pulse. Thus, the frequency is characteristic of the vertical beam angle. Preferably, the frequencies and the vertical beam angles of the pulses in the sequence vary progressively in the sequence. The frequencies and the vertical beam angles of the pulses in the sequence may vary randomly in the sequence.

Each transmitted ultrasound wave pulse has a frequency different to that of the preceding pulse. The frequencies of the pulses may vary progressively in the sequence. The frequencies of the pulses may vary randomly in the sequence, which may have an advantage in environments with a high noise.

The frequencies of the ultrasound wave pulses from the transmitter elements may be in the range of 50kHz to 500 kHz, preferably in the range of 50kHz to 300 kHz. For long range applications the frequencies are preferably in the range 60kHz to 90 kHz. For short range applications, the frequencies are preferably in the range of 200kHz to 300 kHz. The frequencies of the pulses may progress in the sequence between 60kHz and 90 kHz or between 200kHz and 300kHz. Thus, for example with a contiguous sequence of ultrasound wave pulses, the first pulse in the sequence may have a frequency of 60 kHz and successive pulses may have increasingly higher frequencies up to 90 kHz for the pulse at the end of the sequence. In another example of a contiguous sequence of pulses, the first pulse in the sequence may have a frequency of 200 kHz and successive pulses may have increasingly higher frequencies up to 300 kHz for the pulse at the end of the sequence.

Typically, the range of frequencies may be centred on a nominal frequency centre ("fc"). Suitably, the frequencies of the ultrasound wave pulses may be in the range of 80% to 120% of fc. Preferably, the frequencies of the pulses progress in the sequence from 80 % of fc to 120% of fc. For long range applications with low frequencies, fc may be for example, 75kHz, with the frequencies of the pulses in the range of 80% to 120% of fc, i.e. 60kHz to 90kHz. For short range applications, with high frequencies, fc may be for example, 250kHz, with the frequency pulses in the range of 80% to 120% of fc, i.e. 200kHz to 300kHz.

Each transmitted ultrasound wave pulse has a frequency and a vertical beam angle different to that of the preceding pulse. Thus, the frequency is characteristic of the vertical beam angle. The vertical beam angle is changed by differing phase delays of the transmitter elements. Preferably, the phase delays are progressive from one end of the transmitter array to the other end of the transmitter array. Alternatively, the phase delays may be random from one end of the transmitter array to the other end of the array.

In the sequence, the vertical beam angles of the pulses may be in the range of + 45 degrees to - 45 degrees, preferably in the range of + 10 degrees to - 10 degrees. Preferably, the vertical beam angles of the pulses vary progressively in the sequence between vertical angles in the range of + 45 degrees to - 45 degrees, preferably between vertical angles in the range of + 10 degrees to - 10 degrees. Yet more preferably, the vertical beam angles of the pulses vary progressively in the sequence between + 45 degrees and - 45 degrees, more preferably between + 10 degrees and -10 degrees. Thus, the pulse at the start of the sequence may have a vertical beam angle of + 45 degrees and successive pulses may have vertical beam angles increasingly downward pointing to a beam angle of- 45 degrees for the pulse at the end of the sequence. Preferably, the pulse at the start of the sequence may have a vertical beam angle of + 10 degrees and successive pulses may have vertical beam angles increasingly downward pointing to a beam angle of - 10 degrees for the pulse at the end of the sequence.

Preferably, during the sequence, the frequencies of the ultrasound wave pulses may progress in the sequence from 60 kHz to 90 kHz and the beam angles of the ultrasound wave pulses may progress in the sequence from + 10 degrees to - 10 degrees.

The array of transmitter elements may have an acoustic power in excess of 210dB re 1uPa at 1m.

The transmitter elements may have a power level control so that acoustic power may be reduced when the ship is in a confined space.

There may be any number of transmitter elements in the elongate array of transmitter elements. Suitably, the elongate array of transmitter elements has between 32 and 128 transmitter elements. Suitably, the elongate array of transmitter elements has binary numbers of transmitter elements, for example 32, 64 or 128 elements. A preferred elongate array of transmitter elements has 64 transmitter elements.

The transmitter elements may be operated to transmit ultrasound wave pulses with a range of waveforms which may be programmable. The transmitter elements may be operated to transmit ultrasound wave pulses with a range of waveforms which may be changed between sequences of ultrasound wave pulses, which may enable focussing and/or adaptive beam steering.

The length of the array of transmitter elements may be such as to provide a beam of ultrasound wave pulses with a beam width in the vertical plane of 0.5 to 2 degrees, for example, 1 degrees. Each transmitter element may transmit an ultrasound wave pulse in a beam with a beam width in the horizontal plane of 30 to 120 degrees, for example, 90 degrees.

There may be any number of receiver elements in the elongate array of receiver elements. Suitably, the elongate array of receiver elements has between 32 and 128 transmitter elements. Suitably, the elongate array of receiver elements has binary numbers of transmitter elements, for example 32, 64 or 128 elements. A preferred receiver array has 64 receiver elements.

The horizontal array of receiving elements should be mounted pointing in the same direction as the array of transmitter elements. Thus, the faces of the transmitter and receiver elements should be substantially in the same or parallel planes.

The array of receiver elements may be such as to provide a beam width for the array in the vertical plane in the range of 10 to 60 degrees, for example, 20 degrees. The array of receiver elements may be such as to provide a beam width for the array in the horizontal plane in the range of 0.5 to 5 degrees, for example, 2 degrees.

The beam width of the array of receiver elements may be reduced by increasing the number of elements in the array, for example to allow for operation in narrow channels such as canals, to mitigate any effects of reflections from any banks. The beam width of the array of receiver elements may be reduced by using software to process data from only some of the receiver beams around the centre.

The receiver elements receive any ultrasound waves reflected from objects in front of the ship. The outputs from the receiving elements are steered horizontally as a beam by using differing phase shifts for the receiver element outputs. The beam of outputs from the receiver elements may be steered horizontally between angles in the range of + 45 degrees to - 45 degrees. Preferably, the beam of outputs from the receiver elements is steered horizontally between + 45 degrees and - 45 degrees. For each horizontal position of the beam of outputs, the outputs from the receiver elements having those phase shifts associated with that horizontal position of the beam of outputs are summed in a beamformer. The number of beams of outputs from the receiver elements may be the same as the number of receiver elements. The outputs from the receiver elements may be amplified, digitised and then summed using a wideband time-delay beamformer. In this way, a horizontal data set is determined for the receiver elements in response to each of the transmitted pulses. For example, for an elongate array of 64 transmitter elements producing a sequence of 32 ultrasonic wave pulses and an elongate array of 64 receiver elements producing 64 beams of output, 64 horizontal data sets are obtained for each of 32 vertical data sets. The frequency and vertical angle of the transmitter elements provide the vertical component and the beams of receiver output provide the horizontal component for determining the 3-dimensional coordinates of any objects in front of the ship. The distance of any objects in front of the ship may be determined by converting the time between successive samples of output from the receiver element beams using a knowledge of the speed of sound in water. The number of samples dictates the range and the frequency of the samples dictates the resolution.

From the sets of data, the 3-dimensional coordinates of any objects in front of the ship may be determined. The co-ordinates may be represented for example, in 2-dimensions on a display screen or as a 2-dimensional representation of the 3-dimensional coordinates on a display screen.

The transmitter and receiver arrays may have associated processing electronics and power supply, suitably d.c. power. Signals may be transmitted to and from the arrays by fibre-optic telemetry which gives them excellent noise immunity. The apparatus of the present invention may be associated with one or more navigational equipment of the ship selected from the group consisting of Motion Reference Units, Global Positioning Satellite equipment and the ship's gyro. Motion Reference Units may provide information about the pitch, roll and/or heave of the ship. Global Positioning Satellite equipment may provide information about the ship's position. The ship's gyro may provide information about the ship's heading.

The present invention may be used by ships for grounding avoidance. The present invention can provide a real time display of the terrain ahead of a ship to aid in the avoidance of groundings and collisions with underwater objects.

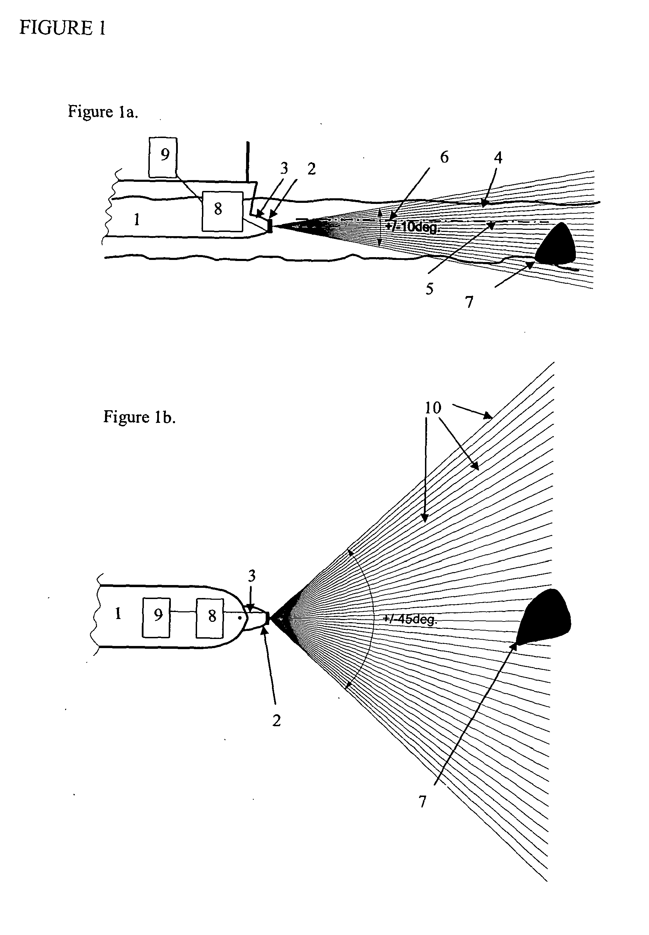

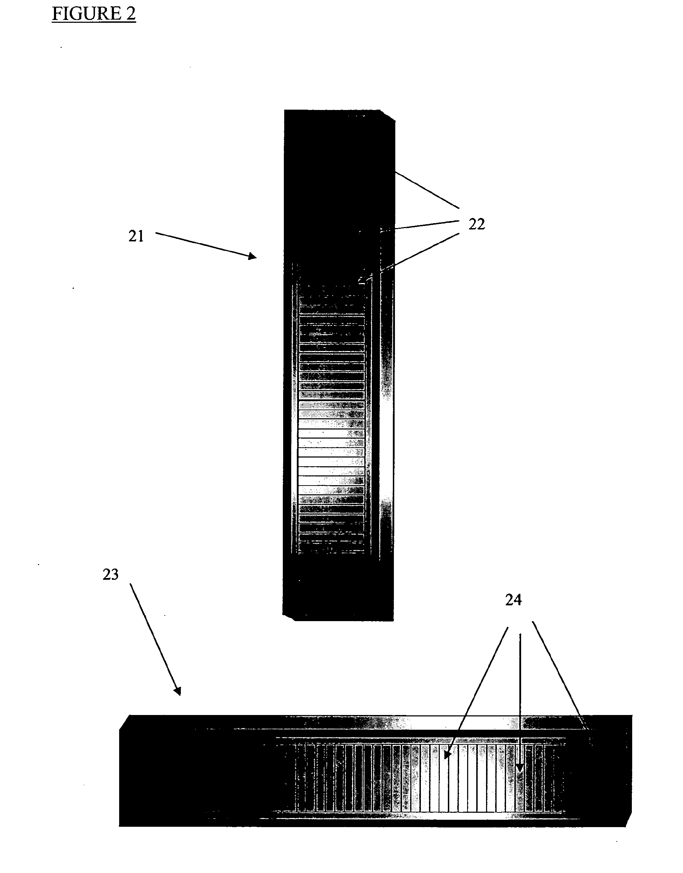

The invention will now be described with respect to the following example and with reference to Figures 1 and 2 in which Figure 1 represents in schematic form in plan and side elevation part of a ship with a sonar system according to the present invention and Figure 2 represents arrays of transmitter elements and receiver elements for use in the present invention.

Referring to Figure 1, Figure 1a represents the side elevation of part of a ship (1) having an underwater sonar system (2) according to the present invention and Figure 1b represents the side elevation of part of the ship (1) having an underwater sonar system (2) according to the present invention. The underwater sonar system (2) shown in Figure 1 may comprise an elongate array (21) of ultrasound transmitter elements (22) and an elongate array (23) of ultrasound receiver elements (24) which are not shown in detail in Figure 1 but are shown in Figure 2.

Referring to Figures 1 and 2, the array of transmitter elements is mounted substantially vertically and forward facing on the bow (3) of the ship and is adapted such that in use, the transmitter elements transmit a sequence of ultrasound wave pulses, each pulse being in a beam (4) in the direction of travel of the ship, with each pulse having a frequency and vertical beam angle which are different to the frequency and vertical beam angle of the preceding pulse in the sequence, the frequency being characteristic of the vertical beam angle. Preferably, the frequencies and beam angles of pulses vary progressively in the sequence. The array of receiver elements is mounted substantially horizontally on the bow (3) of said ship with the receiver elements forward facing to receive any ultrasound waves reflected from objects in front of the ship.

Referring to Figure 2, the elongate array (21) of transmitter elements comprises piezoelectric transmitter elements (22) which are rectangular ceramic elements. There may be 64 such elements in the array. The elongate array (23) of receiver elements comprises receiver elements (24) which are rectangular piezoelectric ceramic elements. There may be 64 such elements in the array. The transmitter and receiver elements may be constructed from anodised aluminium, aluminium bronze, stainless steel, titanium or any other material suitable for long term immersion in seawater, with polyurethane encapsulating the piezoelectric ceramic elements.

In use in the process of the present invention, the transmitter elements (22) of the array (21) transmit, a sequence of ultrasound wave pulses (4), with each pulse having a frequency and vertical beam angle which are different to the frequency and vertical beam angle of the preceding pulse; the receiver elements (24) of the array (23) receive any ultrasound waves reflected from objects (7) in front of the ship and the 3-dimensional coordinates of any such objects are determined from the ultrasound waves received by the receiver elements.

The beam width in the horizontal plane (5) of the ultrasound wave pulse transmitted in a beam from the transmitter elements may be 90 degrees. The beam width in the vertical plane of the ultrasound wave pulse transmitted in a beam from the transmitter elements may be 1 degree.

During the sequence, the frequency of the ultrasound wave pulses may progress from 60 kHz to 90 kHz and the vertical beam angle (6) of the ultrasound wave pulses may progress from +10 degrees to - 10 degrees.

Each ultrasound wave pulse may have a duration of 2 ms. The sequence of ultrasound wave pulses may be repeated at a frequency of 1 to 2 seconds.

The array of receiver elements may have a beam width of 20 degrees in the vertical plane and 2 degrees in the horizontal plane.

The receiver elements (24) receive any ultrasound waves reflected from objects (7) in front of the ship (1). The outputs from the receiving elements are steered horizontally as a beam (10) by using differing phase shifts for the receiver element outputs. The beam of outputs from the receiver elements may be steered horizontally between + 45 degrees and - 45 degrees. For each horizontal position of the output beam, the outputs from the receiver elements (24) with those phase shifts associated with that horizontal position of the beam of outputs are summed in the beamformer (8) which may be a wideband time-delay beamformer. In this way, a horizontal data set is determined for the receiver elements in response to each of the transmitted pulses. For an elongate array of 64 transmitter elements producing a sequence of 32 ultrasonic wave pulses and an elongate array of 64 receiver elements producing 64 beams of output, 64 horizontal data sets are obtained for each of 32 vertical data sets. The frequency and vertical angle of the transmitter elements provide the vertical component and the beams of receiver output provide the horizontal component for determining the 3-dimensional coordinates of the object (7) in front of the ship (1). The distance of any objects in front of the ship may be determined by converting the time between successive samples of output from the receiver element beams using a knowledge of the speed of sound in water. The number of samples dictates the range and the frequency of the samples dictates the resolution.

The co-ordinates may be represented for example, in 2-dimensions on a display screen (9) or as a 2-dimensional representation of the 3-dimensional coordinates on a display screen (9).

The apparatus and method described in this example may be used by the ship (1) to avoid grounding on the object (7).

## Claims

1. A process for detecting underwater objects comprising :
(a) providing a ship with an underwater sonar system comprising an elongate array of ultrasound transmitter elements and an elongate array of ultrasound receiver elements in which the array of transmitter elements is mounted substantially vertically and forward facing on the bow of the ship such that in use, the transmitter elements transmit ultrasound wave pulses in a beam in the direction of travel of the ship, and the array of receiver elements is mounted substantially horizontally on the bow of said ship with the receiver elements forward facing to receive any ultrasound waves reflected from objects in front of the ship;
(b) transmitting from the transmitter elements, a sequence of ultrasound wave pulses, with each pulse having a frequency and vertical beam angle which are different to the frequency and vertical beam angle of the preceding pulse in the sequence, the frequency being characteristic of the vertical beam angle;
(c) receiving with the receiver elements, any ultrasound waves reflected from objects in front of the ship; horizontally steering a beam of outputs from the receiver elements by using differing phase shifts for the receiver element outputs; and for each horizontal position of the beam of outputs, summing in a beamformer, the outputs from the receiver elements having those phase shifts associated with that horizontal position of the beam of outputs; and
(d) determining the 3-dimensional coordinates of any objects in front of the ship from the summed outputs from the receiver elements.

2. A process as claimed in claim 1 in which the frequencies and vertical beam angles of the pulses in the sequence vary progressively in the sequence.

3. A process as claimed in claim 2 in which the frequencies of the pulses progress in the sequence between 60kHz and 90 kHz or between 200kHz and 300kHz.

4. A process as claimed in claim 2 or claim 3 in which the vertical beam angle varies progressively in the sequence between vertical beam angles in the range of +45 degrees to - 45 degrees.

5. A process as claimed in claim 4 in which the vertical beam angles vary progressively in the sequence between vertical angles in the range of +10 degrees to - 10 degrees.

6. A process as claimed in any one of the preceding claims in which the beam of outputs from the receiver elements is steered horizontally between angles in the range of + 45 degrees to - 45 degrees.

7. A ship having an underwater sonar system comprising an elongate array of ultrasound transmitter elements and an elongate array of ultrasound receiver elements
**characterised in that**:
(i) the array of transmitter elements is mounted substantially vertically and forward facing on the bow of the ship and is adapted such that in use, the transmitter elements transmit a sequence of ultrasound wave pulses, each pulse being in a beam in the direction of travel of the ship, with each pulse having a frequency and vertical beam angle which are different to the frequency and vertical beam angle of the preceding pulse in the sequence, the frequency being characteristic of the vertical beam angle, and
(ii) the array of receiver elements is mounted substantially horizontally on the bow of said ship with the receiver elements forward facing to receive any ultrasound waves reflected from objects in front of the ship, and is adapted such that in use, a beam of outputs from the receiver elements is steered horizontally by using differing phase shifts for the receiver element outputs and for each horizontal position of the beam of outputs, the outputs from the receiver elements having those phase shifts associated with that horizontal position of the beam of outputs are summed in a beamformer.

8. A ship as claimed in claim 7 having an elongate array of between 32 and 128 transmitter elements and an elongate array of between 32 and 128 receiver elements.

9. A ship as claimed in claim 8 having an elongate array of 64 transmitter elements and an elongate array of 64 receiver elements.
